# EUROPEAN PATENT SPECIFICATION

(11) **EP 1 321 027 B1**
(45) Date of publication and mention of the grant of the patent: **27.02.2008**
(21) Application number: 02258692.9
(22) Date of filing: 17.12.2002
(51) Int. Cl.: A01D 75/30

(54) **Gang mower assembly**
Mäher mit großer Breite
Tondeuse à grande largeur

(30) Priority: 20.12.2001 GB 0130396
(43) Date of publication of application: 25.06.2003
(73) Proprietor: Kverneland ASA, 4344 Kvernaland (NO)
(72) Inventor: Van Amstel, Leonardus H.M., c/o Kverneland ASA, 4344 Kvernaland (NO); Van de Walle, Jacobus I., c/o Kverneland ASA, 4344 Kvernaland (NO); Pedersen, Peder, c/o Kverneland ASA, 4344 Kvernaland (NO); Lauritzen, Georg, c/o Kverneland ASA, 4344 Kvernaland (NO)
(74) Representative: Raynor, Simon Mark

(56) References cited:
- EP-A- 0 342 700
- DE-U- 29 816 837
- GB-A- 829 367
- GB-A- 2 023 392
- US-A- 4 304 086
- US-A- 5 851 020
- US-A- 6 032 441
- US-B1- 6 481 191

## Description

This invention relates to a gang mower assembly which comprises a steerable wheeled driving unit having a chassis and front and rear wheel sets supporting the chassis, and at least two mower units connected to the chassis so as to be spaced apart with respect to the direction of forward travel.

In the formation of a gang mower assembly, it is usually necessary to provide an amount of lateral overlap between successive (following) mower units, when the assembly is travelling forward in a straight line, so as to minimise the risk of creating unmown areas when the assembly carries out a steering manoeuvre (whether a fixed curve or an irregular curve). The provision of an overlap, during forward travel in a straight line, is not an efficient use of the mowing capacity of a gang mower assembly, and manufacturers have been trying for many years to reduce the amount of overlap which is required.

A further problem with a gang mower assembly (having following mower units), is the requirement to minimise the risk of any of the wheels of the driving unit running over unmown areas during steering manoeuvres.

It is known from EP-A-0 342 700 to provide a gang mower assembly 20 comprising a steerable wheeled driving unit, a front mower unit 21 mounted on a forward part of the driving unit, a rear mower unit 22 connected to a rear part of the driving unit and a pivot steering mechanism 44 interconnecting the front and rear chassis parts.

The present invention therefore seeks to provide a simple design solution, in connection with a gang mower assembly of following mower units, in which the lateral overlap during forward straight line travel is substantially reduced, while at the same time minimising the risk of creating unmown areas during steering manoeuvres.

A gang mower assembly according to one aspect of the invention comprises:
a gang mower assembly which comprises:
   a steerable wheeled driving unit; and,
   front and rear mower units spaced apart lengthwise of the driving unit, and laterally spaced apart so as to present a combined mowing face to a standing crop and with an overlap setting which is zero or of minimal extent during straight line forward mowing, the front mower unit being mounted on a forward part of the driving unit, and the rear mower unit being connected to a rear part of the driving unit;
   characterised by monitoring means which is operative, during a steering manoeuvre, to monitor instantaneously (i) distance travelled and (ii) the steering angle and to generate a compensating adjustment signal for the lateral adjustment of the rear mower unit; and
   control means which is responsive to the adjustment signal to effect instantaneous lateral adjustment of the rear mower unit so that the rear mower unit substantially follows the path of the front mower unit and effectively maintaining the overlap setting, during a steering manoeuvre, and substantially without risk of an unmown area being formed.

According to a further aspect of the invention there is provided a gang mower assembly which is adapted to be mounted on a steerable wheeled driving unit and which comprises:
front and rear mower units arranged to be spaced apart lengthwise of the driving unit, and laterally spaced apart so as to present a combined mowing face to a standing crop and with an overlap setting which is zero or of minimal extent during straight line forward mowing, the front mower unit being intended to be mounted on a forward part of the driving unit, and the rear mower unit is connectable to a rear part of the driving unit;
characterised by monitoring means which is operative, during a steering manoeuvre, to monitor instantaneously (I) distance travelled and (ii) the steering angle and to generate a compensating adjustment signal for the lateral adjustment of the rear mower unit; and
control means which is responsive to the adjustment signal to effect instantaneous lateral adjustment of the rear mower unit so that the rear mower unit substantially follows the path of the front mower unit and effectively maintaining the overlap setting, during a steering manoeuvre, and substantially without risk of an unmown area being formed.

Therefore, a gang mower assembly according to the invention is able to adjust the lateral position of the rear mower unit, during a steering manoeuvre, so as to compensate for the lateral steering movement of the front mower unit, and effectively maintain substantially constant overlap setting.

This adjustment can take place during a transition stage between straight line driving and driving along a constant curved steering path, in which case the lateral adjustment of the rear unit starts from zero and works up to a maximum and then moves progressively back to zero.

In the case of variable steering i.e. movement along an irregular curved path, the rear mower unit will adjust itself laterally to compensate automatically for the varying lateral steering position of the front unit (with respect to the longitudinal axis of the driving unit).

In one embodiment, the driving unit has a chassis, and front and rear wheel sets supporting the chassis, in which the chassis has a front part on which the front mower unit is mounted, and a rear part to which the rear mower unit is connected, and in which there is a pivot steering mechanism which interconnects the front and rear chassis parts.

In this embodiment, the control means is operative to adjust the position of the rear mower unit laterally relative to the chassis and in an opposite direction to the direction of lateral movement of the front mower unit during a steering manoeuvre.

In a second embodiment, the driving unit has a chassis, and steerable front and rear wheel sets supporting the chassis. In this embodiment, the front wheel set may be used to carry out a steering manoeuvre, and therefore the monitoring means will monitor instantaneously (a) the distance travelled and (b) the steering angle of the front wheels, and then deliver an integrated compensating signal, to which the control means responds and effects suitable compensatory steering adjustment of the steerable rear wheels, in order to carry out required lateral adjustment of the rear mower unit.

In a third embodiment, the driving unit may comprise a tractor having steerable front wheels, and the rear mower unit may be mounted on a trailed vehicle. The compensatory feedback signal may then be applied to adjust the position of the rear mower unit laterally, either by a steering adjustment of the trailed vehicle, or by lateral adjustment of the mower unit relative to the frame of the trailed vehicle.

In a particularly preferred arrangement, applicable to any of the embodiments, a pair of rear wing mower units may be provided, each located laterally outwardly to a corresponding side of the front mower unit, and with zero or minimal lateral overlap between the inboard end of each wing mower and the corresponding outer end of the front mower unit.

In some circumstances of operation, it is possible that the driver may attempt to take too sharp a turn in a steering manoeuvre (and which cannot be sufficiently compensated for by lateral adjustment of the rear mower unit(s)), in which case an alarm signal may be triggered to give notice of this to the driver who can then apply a less sharp turn of the steering mechanism.

In all embodiments of the invention, it may be desirable to provide an adjustable mounting of the front mower unit, so that the front mower unit may be laterally displaceable during any steering manoeuvre, i.e. will move laterally to the right during a right handed steering movement, and will be displaced laterally to the left during a left handed steering movement, so that the mower unit will be laterally off-set and can mow a standing crop which otherwise would be run over by the front wheels of the driving unit.

According to a further aspect of the invention there is provided a method of operating a gang mower assembly which comprises a steerable wheeled driving unit, front and rear mower units spaced apart lengthwise of the driving unit, and laterally spaced apart so as to present a combined mowing face to a standing crop and with an overlap setting which is zero or of minimal extent during straight line forward mowing, monitoring means which is operative, during a steering manoeuvre, to monitor instantaneously (I) distance travelled and (ii) the steering angle and to indicate the required extent of lateral adjustment of the rear mower unit so that the latter can follow the path of steering movement of the front mower unit while maintaining substantially the overlap setting, and control means capable of effecting instantaneous lateral adjustment of the rear mower unit;
in which the method comprising the steps of steering the front mower unit from a straight line path during a steering manoeuvre;
monitoring instantaneously the distance travelled and the steering angle, and generating an indication to the driver of the required lateral adjustment of the rear mower unit; and
applying manual operation of the control means so as to adjust the rear mower unit laterally by a sufficient amount so that it follows the path of the front mower unit while maintaining the overlap setting, during the steering manoeuvre, and substantially without risk of an unmown area being formed.

A preferred embodiment of gang mower assembly according to the invention will now be described in detail, by way of example only, with reference to the accompanying drawings, in which:
Figure 1 is a diagrammatic plan view of a typical existing gang mower assembly, but without lateral overlap between the front mower unit and one of the rear mower units, and so as to illustrate how this would give rise to unmown areas during a steering manoeuvre; and,
Figure 2 is a plan view illustration of a first embodiment of gang mower assembly according to the invention, having a steerable wheeled drive unit having a front chassis part and a rear chassis part which are connected together by a pivot steering arrangement.

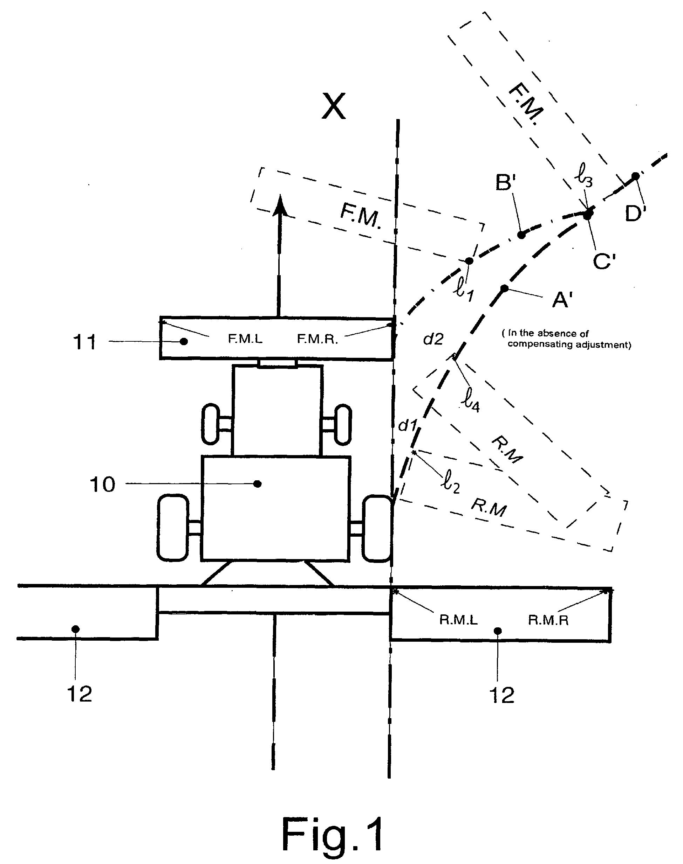

Referring first to Figure 1 of the drawings, this will be described to set out the background to the invention, and shows how unmown areas will be formed with existing gang mower assemblies, if no lateral overlap is provided between the inboard end of the rear mower unit, and the corresponding end of the front mower unit.

Figure 1 shows a driving unit 10, and a front mower unit 11 mounted on the chassis of the driving unit 10 at the forward end thereof. A pair of rear "wing" mower units 12 is provided, and it will be noted that the rear mower units 12 do not have any lateral overlap relative to the front mower unit 11. Assuming the gang mower assembly is going to steer to the right, the relative paths of travel of the front mower unit 11 and the right hand one of the rear mower units 12 will now be described. Thus, the inboard or left hand end of rear mower unit 12, designated RML, is substantially in line with the right hand end of front mower unit 11, designated FMR. During a typical steering manoeuvre, which is to the right as illustrated, the end FMR follows a steered path B', whereas end RML of the rear mower unit 12 follows path A' (in the absence of any compensating adjustment).

Clearly, with the arrangement shown in Figure 1, there will be substantial unmown area, during a steering manoeuvre, and which is represented by the area defined between paths A' and B'. It is for this reason therefore that in existing arrangements, it is usual to provide substantial lateral overlap between end FMR and end RML, and which typically is 30 to 40 cm during straight line mowing in the direction of the arrow X.

It is the purpose of the invention to provide compensating lateral adjustment of the rear mower unit 12, during a steering manoeuvre, whereby the rear mower unit 12 undergoes lateral adjustment movement by a sufficient amount so that end RML substantially follows the path of end FMR of the front mower unit during a steering manoeuvre.

In the absence of the invention, after end FMR has followed a path of travel of length *l*₁ along steered path B', end RML will have moved along path A' through a distance of l₂. There will then be a lateral deviation of rear mower unit 12 by distance d₁, and which represents the beginning of the creation of an unmown area.

The drawing also shows the movement of end FMR along length l₃ of steering path B', and when end RML will then have travelled distance l₄ along unadjusted path A', in which case there will be a lateral deviation of d₂. Finally, by the time the paths A' and B' intersect, at point C', this represents the end of a transitional phase between straight line mowing in a direction X, and the end of a steering manoeuvre. This is followed by movement along a straight path D'.

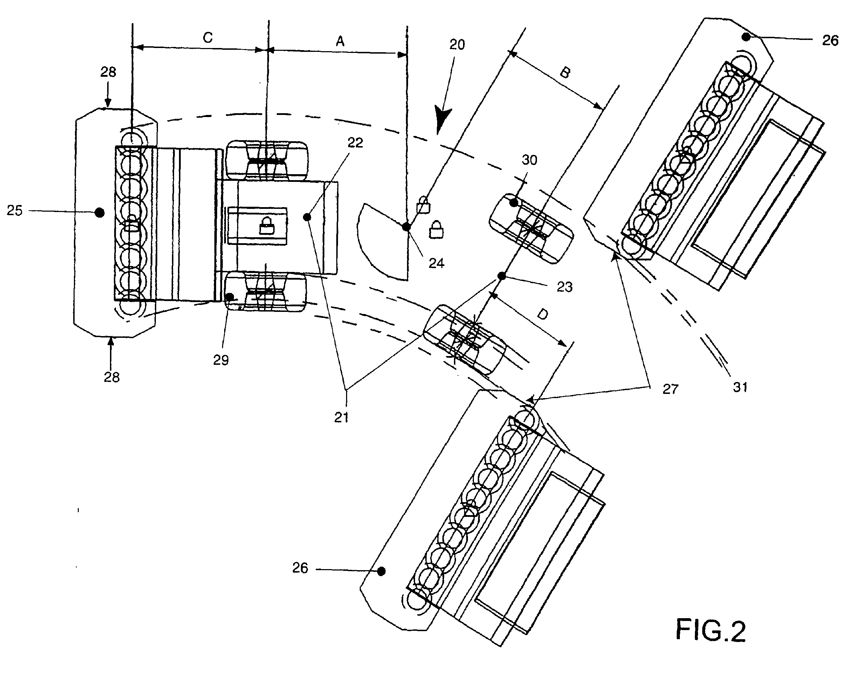

Figure 1 is a schematic illustration of the paths followed by a mower assembly of a steerable type as shown in Figure 1, but without the automatic lateral compensating movement provided by the invention as described in more detail below for a preferred embodiment of the invention. For other types of steerable gang mower assemblies (e.g. of the type shown in Figure 2 as described below), the schematic illustration of the (non-compensated) paths of the front and rear mower unit may be different, i.e. the path C' - D¹ will be a fixed curve or a straight line.

As will be described in more detail below with reference to the preferred embodiments, it is the purpose of the invention to provide monitoring means which monitors instantaneously the distance travelled by end FMR along path B', and also the steering angle. It includes computer software which integrates the two amounts, and then generates a compensatory adjustment signal, so that a corresponding amount of lateral adjustment is automatically applied to the rear mower unit 12, so that end RMR substantially follows the path B' along which end FMR moves. The invention also provides control means which responds to the adjustment signal and effects instantaneous lateral adjustment of the rear mower unit so that it substantially follows the path of the front mower unit and effectively maintaining the initial overlap setting, during a steering manoeuvre, and substantially without risk of an unmown area being formed.

Referring now to Figure 2 of the drawings, one preferred embodiment of the invention will now be described in detail, and which is designated generally by reference 20. The assembly 20 comprises a steerable wheeled driving unit 21 having a front chassis part 22 and a rear chassis part 23 which are coupled together by a pivot type steering arrangement (not shown in detail), and which defines vertical steering pivot axis 24. A front mower unit 25 is mounted on the forward end of the front chassis part 22, and a pair of rear wing mower units 26 are provided, connected one on each side of the rear end of the rear chassis part 23. The front mower unit 25, and each of the rear mower units 26 are spaced apart lengthwise of the driving unit 21, and are laterally spaced apart so as to present a combined mowing face to a standing crop, and with an overlap setting between the inboard end 27 of each rear mower unit 26 and the corresponding outer end 28 of the front mower unit 25 which is zero or of minimal extent during straight line forward mowing.

The front chassis part 22 is supported by a front wheel set 29 having a fixed axle, and the rear chassis part 23 is supported by rear wheel set 30, which also has a fixed axle. Steering of the vehicle 21 is obtained by operation of the pivot steering mechanism which pivots the front and rear chassis parts 22, 23, so that a steering manoeuvre can take place. Figure 2 shows the gang mower assembly 20 moving along a curved path of fixed radius, during a steering manoeuvre. There is very small i.e. minimal lateral overlap between the front mower unit 25 and each of the rear mower units 26, as shown by reference 31. This is a stable situation, during movement along a curved steering path of fixed radius, and means that no unmown areas are produced.

However, in the transition from straight line mowing to steering movement along a curve of fixed radius, there is a requirement to effect automatic lateral adjustment of each of the rear mower units 26, as a direct consequence of the lateral movement of the front mower unit 25 during a steering manoeuvre. In other words, there is a requirement to avoid creation of unmown area between paths A' and B' as described above with reference to Figure 1.

Therefore, although not shown in detail, monitoring means is provided which gives instantaneous monitoring of (a) distance travelled and (b) steering angle, so as to generate a compensating adjustment signal for necessary lateral adjustment of each rear mower unit 26. Also, control means (not shown) is provided, responsive to the adjustment signal to effect instantaneous lateral adjustment of the rear mower unit so that the rear mower unit substantially follows the path of the front mower unit while maintaining substantially the same overlap setting. This arises during any steering manoeuvre, so as to substantially avoid risk of any unmown area being formed.

Figure 2 shows one preferred embodiment, in which the driving unit has a pivot steering mechanism. Other examples are possible, within the scope of the invention, as will be described below. Also, it is preferred that the ratio of lengths A (distance between front axle and steering pivot), B (distance between rear axle and steering pivot), C (distance between front mower unit 25 and front axle) and D (distance between rear axle and rear mower unit 26) is such that ^{A}/_{C} ≈ ^{B}/_{D}.

Thus, in a second embodiment, the driving unit can have a chassis, and steerable front and rear wheel sets supporting the chassis. The front wheel set may be used to carry out a steering manoeuvre, and the monitoring means instantaneously monitors distance travelled, and the steering angle of the front wheels, and integrates these two monitored items to deliver a suitable compensating signal to the control means, which responds by effecting suitable compensating steering adjustment of the rear set of steerable wheels. If the front steerable wheels are turned to the right, the compensating steering adjustment of the rear wheels will be to the left, so as to effect necessary lateral adjustment of the rear mower unit(s).

In a third embodiment, the driving unit may comprise a tractor having steerable front wheels, and the or each rear mower unit may be mounted on a trailed vehicle. The compensatory feedback signal is then applied to adjust the position of the rear mower unit laterally, either by a steering adjustment of the wheels of the trail vehicle, or by lateral adjustment of the mower unit relative to the frame of the trailed vehicle.

In some circumstance, the driver may attempt to take too sharp a turn in a steering manoeuvre (and which might not be sufficiently compensated by lateral adjustment of the rear mower unit), in which case an alarm signal may be triggered to give notice to the driver who can then apply a less sharp turn to the steering mechanism.

The invention, in another aspect, is concerned with a method of operating a gang mower assembly of the general type described herein, and in which the monitoring means monitors distance travelled instantaneously and the steering angle, and then issues an indication to the driver, and who may then apply manual operation of the control means so as to effect necessary lateral adjustment of the or each rear mower unit.

A preferred development of the embodiments may also provide lateral adjustment capability for the front mower unit, so that the front mower unit moves laterally relative to the chassis during a steering manoeuvre i.e. it moves to the right during right hand steering and to the left during left hand steering, so that the front mower unit can mow a standing crop which would otherwise be run over by the front wheels of the driving unit. The compensating feed back lateral adjustment of the rear mower units will still apply, so that the overlap between the front mower unit and the or each rear mower unit is maintained substantially constant during steering manoeuvres.

## Claims

1. A gang mower assembly (20) which comprises:
a steerable wheeled driving unit (21); and,
front and rear mower units (25, 26) spaced apart lengthwise of the driving unit (21), and laterally spaced apart so as to present a combined mowing face to a standing crop and with an overlap setting (31) which is zero or of minimal extent during straight line forward mowing, the front mower unit (25) being mounted on a forward part (22) of the driving unit (21), and the rear mower unit (26) being connected to a rear part (23) of the driving unit (21);
**characterised by** monitoring means which is operative, during a steering manoeuvre, to monitor instantaneously (i) distance travelled and (ii) the steering angle and to generate a compensating adjustment signal for the lateral adjustment of the rear mower unit (26); and
control means which is responsive to the adjustment signal to effect instantaneous lateral adjustment of the rear mower unit (26) so that the rear mower unit substantially follows the path of the front mower unit (25) and effectively maintaining the overlap setting (31), during a steering manoeuvre, and substantially without risk of an unmown area being formed.

2. A gang mower assembly according to claim 1, in which the driving unit (21) has a chassis having a front part (22) on which the front mower unit (25) is mounted, and a rear part (22) to which the rear mower unit (26) is connected, and a pivot steering mechanism (24) interconnects the front and rear chassis parts (22, 23).

3. A gang mower assembly according to claim 1, in which the driving unit has a chassis, and steerable front and rear wheel sets support the chassis, the front wheel set being used to carry out a steering manoeuvre and the monitoring means applying a compensating signal to the control means which can effect suitable compensating steering adjustment of the steerable rear wheel set.

4. A gang mower assembly according to claim 1, in which the driving unit comprises a tractor having steerable front wheels, and the rear mower unit is mounted on a trailed vehicle, and in which the control means is operative to adjust the position of the rear mower unit laterally, by a steering adjustment of the trailed vehicle or by a lateral adjustment of the mower unit relative to the frame of the trailed vehicle.

5. A gang mower assembly according to any one of the preceding claims, including a pair of rear wing mower units (26).

6. A gang mower assembly according to claim 1, in which the driving unit is a tractor.

7. A gang mower assembly according to any one of the preceding claims, including means for generating an alarm signal, when the driver attempts to make too sharp a turn in a steering manoeuvre, to give notice to the driver who can then apply a less sharp turn to the steering mechanism.

8. A gang mower assembly according to any one of the preceding claims, including an adjustable mounting of the front mower unit (25) on the chassis of the driving unit (21), which is operative to apply lateral adjustment to the front mower unit during a steering manoeuvre, so that the front mower unit lies ahead of the path of the front wheels, and thereby to prevent the wheels running over unmown crop.

9. A method of operating a gang mower assembly which comprises a steerable wheeled driving unit, front and rear mower units spaced apart lengthwise of the driving unit and laterally spaced apart so as to present a combined mowing face to a standing crop and with an overlap setting which is zero or of minimal extent during straight line forward mowing, monitoring means to monitor instantaneously distance travelled and the steering angle, and to generate a signal indicative of required lateral adjustment of the rear mower unit, and control means operative to effect instantaneous lateral adjustment of the rear mower unit, and comprising the following steps:
steering the front mower unit from a straight line position during a steering manoeuvre;
monitoring instantaneously the distance travelled and the steering angle and generating an indication to the driver of required lateral adjustment of the rear mower unit; and,
applying manual operation of the control means so as to adjust the rear mower unit laterally by a sufficient amount so that it follows the path of the front mower unit while maintaining the overlap setting, during the steering manoeuvre, and substantially without risk of an unmown area being formed.

10. A gang mower assembly (20) which is adapted to be mounted on a steerable wheeled driving unit (21) and which comprises:
front and rear mower units (25, 26) arranged to be spaced apart lengthwise of the driving unit (21), and laterally spaced apart so as to present a combined mowing face to a standing crop and with an overlap setting (31) which is zero or of minimal extent during straight line forward mowing, the front mower unit (25) being intended to be mounted on a forward part (22) of the driving unit (21), and the rear mower unit (26) is connectable to a rear part (23) of the driving unit (21);
**characterised by** monitoring means which is operative, during a steering manoeuvre, to monitor instantaneously (i) distance travelled and (ii) the steering angle and to generate a compensating adjustment signal for the lateral adjustment of the rear mower unit (26); and
control means which is responsive to the adjustment signal to effect instantaneous lateral adjustment of the rear mower unit (26) so that the rear mower unit substantially follows the path of the front mower unit (25) and effectively maintaining the overlap setting (31), during a steering manoeuvre, and substantially without risk of an unmown area being formed.

11. A gang mower assembly according to claim 10, including a pair of rear wing mower units (26).

12. A gang mower assembly according to claim 10 or 11, including means for generating an alarm signal, when the driver attempts to make too sharp a turn in a steering manoeuvre, to give notice to the driver who can then apply a less sharp turn to the steering mechanism.

13. A gang mower assembly according to any one of claims 1 to 8, or 10 to 12, in which the adjustment signal issued by the monitoring means is operative to initiate automatic operation of the control means.

## Patentansprüche

1. Gruppenmäher mit großer Breite (20), welcher umfasst:
eine lenkbare, mit Rädern versehene Antriebseinheit (21); und
vordere und hintere Mähereinheiten (25, 26), welche längsrichtungsmäßig zur Antriebseinheit (21) beabstandet sind und seitlich beabstandet sind, um so eine kombinierte Mähfront in Bezug zu einer stehenden Kulturpflanze aufzubauen und dies mit einer überlappenden Einstellung (31), welche null oder von minimalem Ausmaß während eines geradlinigen Vorwärtsmähvorgangs ist, wobei die vordere Mäheinheit (25) auf einem vorderen Teil (22) der Antriebseinheit (21) angebracht ist und die hintere Mäheinheit (26) mit einem hinteren Teil (23) der Antriebseinheit (21) verbunden ist;
**gekennzeichnet durch** ein Überwachungsmittel, welches während eines Lenkvorgang in Betrieb ist, um augenblicklich (i) die überfahrene Strecke und (ii) den Lenkwinkel zu überwachen, und ein kompensierendes Anpassungssignal für die seitliche Anpassung der hinteren Mähereinheit (26) zu erzeugen; und
ein Steuerungsmittel, welches auf das Anpassungssignal reagiert, um augenblickliche seitliche Anpassung der hinteren Mähereinheit (26) zu bewirken, so dass die hintere Mähereinheit im Wesentlichen dem Plad der vorderen Mähereinheit (25) folgt und wirksam die Uberlappungseinstellung (31) während eines Lenkmanövers und beibehält und im Wesentlichen ohne das Risiko, dass eine ungemähte Fläche zurück bleibt.

2. Gruppenmäher mit großer Breite gemäß Anspruch 1, in welchem die Antriebseinheit (21) ein Fahrgestell mit einem vorderen Teil (22), auf welchem die vordere Mähereinheit (25) angebracht ist, und mit einem hinteren Teil (22), mit welchem die hintere Mähereinheit (26) verbunden ist, aufweist und in welchem ein Drehgelenkslenkungsmechanismus (24) den vorderen und den hinteren Fahrgestellteil (22, 23) miteinander verbindet.

3. Gruppenmäher mit großer Breite gemäß Anspruch 1, in welchem die Antriebseinheit ein Fahrgestell aufweist und in welchem lenkbare Vorder- und Hinterradsätze das Fahrgestell tragen, wobei der Vorderradsatz dazu verwendet wird, ein Lenkmanöver auszuführen, und wobei das Überwachungsmittel ein Kompensationssignal an das Steuerungsmittel anlegt, das eine geeignete kompensierende Lenkanpassung des lenkbaren Hinterradsatzes bewirkt.

4. Gruppenmäher mit großer Breite gemäß Anspruch 1, in welchem die Antriebseinheit einen Traktor umfasst, welcher lenkbare Vorderräder aufweist und in welchem die hintere Mähereinheit auf einem nachgezogenen Fahrzeug angebracht ist und in welchem das Steuerungsmittel betrieben wird, um die Position der hinteren Mähereinheit seitlich durch eine Lenkanpassung des nachgezogenen Fahrzeugs oder durch eine seitliche Anpassung der Mähereinheit relativ zum nachgezogenen Fahrzeug anzupassen.

5. Gruppenmäher mit großer Breite gemäß jedem der vorangehenden Ansprüche, umfassend ein Paar von hinteren Flügelmähereinheiten (26).

6. Gruppenmäher mit großer Breite gemäß Anspruch 1, in welchem die Antriebseinheit ein Traktor ist.

7. Gruppenmäher mit großer Breite gemäß jedem der vorangehenden Ansprüche, umfassend Mittel zum Erzeugen eines Alarmsignals, wenn der Fahrer eine zu scharfe Kurve in einem Lenkmanöver versucht, um den Fahrer darauf aufmerksam zu machen, der dann eine weniger scharfe Kurve an den Lenkmechanismus vorgibt.

8. Gruppenmäher mit großer Breite gemäß jedem der vorangehenden Ansprüche, umfassend eine anpassbare Anbringung der vorderen Mähereinheit (25) auf dem Fahrgestell der Antriebseinheit (21), welche betrieben wird, um eine seitliche Anpassung an der vorderen Mähereinheit während eines Lenkmanövers anzulegen, so dass die vordere Mähereinheit vor dem Pfad der Vorderräder liegt, und um dadurch zu verhindern, dass die Räder über ungemähte Kulturpflanzen rollen.

9. Verfahren zum Betreiben eines Gruppenmähers mit großer Breite, welcher eine lenkbare, mit Rädern versehene Antriebseinheit, vordere und hintere Mähereinheiten, die längsrichtungsmäßig zur Antriebseinheit beabstandet sind und seitlich beabstandet sind, um so eine kombinierte Mähfront in Bezug zu einer stehenden Kulturpflanze aufzubauen und dies mit einer überlappenden Einstellung, welche null oder von minimalem Ausmaß während eines geradlinigen Vorwärtsmähvorgangs ist, ein Überwachungsmittel, um augenblicklich die überfahrene Strecke und den Lenkwinkel zu überwachen und um ein Signal zu erzeugen, welches bezeichnend für die erforderliche seitliche Anpassung der hinteren Mähereinheit ist, und
ein Steuerungsmittel umfasst, welches dazu betrieben wird, um augenblickliche seitliche Anpassung der hinteren Mähereinheit zu bewirken, und umfassend die folgenden Schritte:
Lenken der vorderen Mähereinheit aus einer geraden Position während eines Lenkmanövers;
augenblickliches Überwachen der zurückgelegten Strecke und des Lenkwinkels und Erzeugen einer Anzeige für den Fahrer über die erforderliche seitliche Anpassung der hinteren Mähereinheit; und
Anlegen händischer Betätigung an die Steuermittel, um so die hintere Mähereinheit seitlich um ein ausreichendes Ausmaß anzupassen, so dass sie dem Pfad der vorderen Mähereinheit folgt, während eine Überlappungseinstellung während des Lenkmanövers beibehalten wird und im Wesentlichen ohne Risiko der Ausbildung einer nicht gemähten Fläche.

10. Gruppenmäher mit großer Breite (20), welcher ausgelegt ist, um auf einer lenkbaren, mit Rädern versehenen Antriebseinheit (21) angebracht zu werden und welcher umfasst:
vordere und hintere Mähereinheiten (25, 26), welche längsrichtungsmäßig zur Antriebseinheit (21) beabstandet sind und seitlich beabstandet sind, um so eine kombinierte Mähfront in Bezug zu einer stehenden Kulturpflanze aufzubauen und dies mit einer überlappenden Einstellung (31), welche null oder von minimalem Ausmaß während eines geradlinigen Vorwärtsmähvorgangs ist, wobei die vordere Mäheinheit (25) auf einem vorderen Teil (22) der Antriebseinheit (21) angebracht werden soll und die hintere Mäheinheit (26) mit einem hinteren Teil (23) der Antriebseinheit (21) verbunden werden kann;
**gekennzeichnet durch** ein Überwachungsmittel, welches während eines Lenkvorgang in Betrieb ist, um augenblicklich (i) die überfahrene Strecke und (ii) den Lenkwinkel zu überwachen, und ein kompensierendes Anpassungssignal für die seitliche Anpassung der hinteren Mähereinheit (26) zu erzeugen; und
ein Steuerungsmittel, welches auf das Anpassungssignal reagiert, um augenblickliche seitliche Anpassung der hinteren Mähereinheit (26) zu bewirken, so dass die hintere Mähereinheit im Wesentlichen dem Pfad der vorderen Mähereinheit (25) folgt und wirksam die Überlappungseinstellung (31) während eines Lenkmanövers beibehält und dies im Wesentlichen ohne das Risiko, dass eine ungemähte Fläche zurück bleibt.

11. Gruppenmäher mit großer Breite gemäß Anspruch 10, umfassend ein Paar von hinteren Flügelmähereinheiten (26).

12. Gruppenmäher mit großer Breite gemäß Anspruch 10 oder 11, umfassend Mittel zum Erzeugen eines Alarmsignals, wenn der Fahrer eine zu scharfe Kurve in einem Lenkmanöver versucht, um den Fahrer darauf aufmerksam zu machen, der dann eine weniger scharfe Kurve an den Lenkmechanismus vorgibt.

13. Gruppenmäher mit großer Breite gemäß jedem der Ansprüche 1 bis 8 oder 10 bis 12, in welchem das Anpassungssignal, das durch das Überwachungsmittel ausgegeben wird, eingesetzt wird, um einen automatischen Betrieb der Steuerungsmittel einzuleiten.

## Revendications

1. Ensemble de faucheuses combinées (20) qui comprend :
une unité motrice à roues orientables (21) ; et
des unités formant faucheuses avant et arrière (25, 26) espacées l'une de l'autre dans la direction longitudinale de l'unité motrice (21), et espacées l'une de l'autre dans la direction latérale de façon à présenter une face de coupe combinée à une récolte sur pied, et ayant un réglage de chevauchement (31) dont l'étendue est nulle ou minimale lors d'une coupe vers l'avant, en ligne droite, l'unité formant faucheuse avant (25) étant montée sur une partie avant (22) de l'unité motrice (21), et l'unité formant faucheuse arrière (26) étant raccordée à une partie arrière (23) de l'unité motrice (21) ;
**caractérisé par** des moyens de surveillance qui ont pour fonction, pendant une manoeuvre de changement de direction, de surveiller instantanément (i) la distance parcourue et (ii) l'angle d'orientation, et de générer un signal d'ajustement de compensation pour l'ajustement latéral de l'unité formant faucheuse arrière (26) ; et
des moyens de commande qui réagissent au signal d'ajustement pour effectuer un ajustement latéral instantané de l'unité formant faucheuse arrière (26), de façon que l'unité formant faucheuse arrière suive essentiellement le trajet de l'unité formant faucheuse avant (25), en conservant efficacement le réglage de chevauchement (31), pendant une manoeuvre de changement de direction, et essentiellement sans risque de formation d'une zone non fauchée.

2. Ensemble de faucheuses combinées selon la revendication 1, dans lequel l'unité motrice (21) a un châssis ayant une partie avant (22) sur laquelle est montée l'unité formant faucheuse avant (25), et une partie arrière (22) à laquelle est raccordée l'unité formant faucheuse arrière (26), et un mécanisme de transmission à pivot (24) relie les parties de châssis avant et arrière (22, 23).

3. Ensemble de faucheuses combinées selon la revendication 1, dans lequel l'unité motrice a un châssis, et des ensembles de roues avant et arrière orientables supportent le châssis, l'ensemble de roues avant étant utilisé pour exécuter une manoeuvre de changement de direction et les moyens de surveillance envoyant un signal de compensation aux moyens de commande, qui peuvent effectuer un ajustement de direction de compensation approprié de l'ensemble de roues arrière orientables.

4. Ensemble de faucheuses combinées selon la revendication 1, dans lequel l'unité motrice comprend un tracteur ayant des roues avant orientables, et l'unité formant faucheuse arrière est montée sur un véhicule traîné, et dans lequel les moyens de commande ont pour fonction d'ajuster latéralement la position de l'unité formant faucheuse arrière, par un ajustement de la direction du véhicule traîné ou par un ajustement latéral de l'unité formant faucheuse par rapport au cadre du véhicule traîné.

5. Ensemble de faucheuses combinées selon l'une quelconque des revendications précédentes, comprenant une paire d'unités formant faucheuses d'ailes arrière (26).

6. Ensemble de faucheuses combinées selon la revendication 1, dans lequel l'unité motrice est un tracteur.

7. Ensemble de faucheuses combinées selon l'une quelconque des revendications précédentes, comprenant des moyens pour générer un signal d'alarme lorsque le conducteur tente d'effectuer un virage trop serré lors d'une manoeuvre de changement de direction, pour avertir le conducteur, qui peut alors appliquer une commande de virage moins serré au mécanisme de changement de direction.

8. Ensemble de faucheuses combinées selon l'une quelconque des revendications précédentes, comprenant un montage réglable de l'unité formant faucheuse avant (25) sur le châssis de l'unité motrice (21), qui a pour fonction d'appliquer un ajustement latéral de l'unité formant faucheuse avant pendant une manoeuvre de changement de direction, de telle sorte que l'unité formant faucheuse avant se trouve à l'avant du trajet des roues avant, ce qui empêche les roues de rouler sur une récolte non fauchée.

9. Procédé de manoeuvre d'un ensemble de faucheuses combinées qui comprend une unité motrice à roues orientables, des unités formant faucheuses avant et arrière espacées l'une de l'autre dans la direction longitudinale de l'unité motrice, et espacées l'une de l'autre dans la direction latérale de façon à présenter une face de coupe combinée à une récolte sur pied, et ayant un réglage de chevauchement dont l'étendue est nulle ou minimale lors d'une coupe vers l'avant, en ligne droite, des moyens de surveillance pour surveiller instantanément la distance parcourue et l'angle d'orientation, et pour générer un signal indiquant un ajustement latéral requis de l'unité formant faucheuse arrière, et des moyens de commande qui ont pour fonction d'effectuer un ajustement latéral instantané de l'unité formant faucheuse arrière, et comprenant les étapes qui consistent à :
changer l'orientation de l'unité formant faucheuse avant depuis une position en ligne droite pendant une manoeuvre de changement de direction ;
surveiller instantanément la distance parcourue et l'angle d'orientation, et générer, à l'attention du conducteur, une indication de l'ajustement latéral requis de l'unité formant faucheuse arrière ; et
actionner manuellement les moyens de commande de façon à ajuster latéralement l'unité formant faucheuse arrière d'une quantité suffisante afin qu'elle suive le trajet de l'unité formant faucheuse avant tout en conservant le réglage de chevauchement, pendant la manoeuvre de changement de direction, et essentiellement sans risque de formation d'une zone non fauchée.

10. Ensemble de faucheuses combinées (20) qui est conçu pour être monté sur une unité motrice à roues orientables (21) et qui comprend :
des unités formant faucheuses avant et arrière (25, 26) disposées de façon à être espacées l'une de l'autre dans la direction longitudinale de l'unité motrice (21), et à être espacées l'une de l'autre dans la direction latérale de façon à présenter une face de coupe combinée à une récolte sur pied, et ayant un réglage de chevauchement (31) dont l'étendue est nulle ou minimale lors d'une coupe vers l'avant, en ligne droite, l'unité formant faucheuse avant (25) étant destinée à être montée sur une partie avant (22) de l'unité motrice (21), et l'unité formant faucheuse arrière (26) pouvant être raccordée à une partie arrière (23) de l'unité motrice (21) ;
**caractérisé par** des moyens de surveillance qui ont pour fonction, pendant une manoeuvre de changement de direction, de surveiller instantanément (i) la distance parcourue et (ii) l'angle d'orientation, et de générer un signal d'ajustement de compensation pour l'ajustement latéral de l'unité formant faucheuse arrière (26) ; et
des moyens de commande qui réagissent au signal d'ajustement pour effectuer un ajustement latéral instantané de l'unité formant faucheuse arrière (26), de telle sorte que l'unité formant faucheuse arrière suive essentiellement le trajet de l'unité formant faucheuse avant (25), en conservant efficacement le réglage de chevauchement (31), pendant une manoeuvre de changement de direction, et essentiellement sans risque de formation d'une zone non fauchée.

11. Ensemble de faucheuses combinées selon la revendication 10, comprenant une paire d'unités formant faucheuses d'ailes arrière (26).

12. Ensemble de faucheuses combinées selon la revendication 10 ou 11, comprenant des moyens pour générer un signal d'alarme lorsque le conducteur tente d'effectuer un virage trop serré lors d'une manoeuvre de changement de direction, pour avertir le conducteur, qui peut alors appliquer une commande de virage moins serré au mécanisme de changement de direction.

13. Ensemble de faucheuses combinées selon l'une quelconque des revendications 1 à 8, ou 10 à 12, dans lequel le signal d'ajustement émis par les moyens de surveillance a pour fonction de lancer le fonctionnement automatique des moyens de commande.
